(19) Europäisches Patentamt
European Patent Office
Office européen des brevets

(11) EP 0 666 474 B1

(12) # EUROPÄISCHE PATENTSCHRIFT

(45) Veröffentlichungstag und Bekanntmachung des Hinweises auf die Patenterteilung:
**31.03.1999 Patentblatt 1999/13**

(51) Int Cl.[6]: **G01N 21/91**

(21) Anmeldenummer: **95101126.1**

(22) Anmeldetag: **27.01.1995**

(54) **Verwendung von im IR-Bereich absorbierenden und fluoreszierenden Verbindungen als Riss-Prüfmittel**

Use of infrared absorbing and fluorescent compositions for flaw detection

Utilisation de composés absorbants et fluorescents dans le domaine des infrarouges pour la détection de criques

(84) Benannte Vertragsstaaten:
**BE CH DE FR GB IT LI NL**

(30) Priorität: **07.02.1994 DE 4403664**

(43) Veröffentlichungstag der Anmeldung:
**09.08.1995 Patentblatt 1995/32**

(73) Patentinhaber: **BASF AKTIENGESELLSCHAFT**
**67056 Ludwigshafen (DE)**

(72) Erfinder:
- **Neumann, Peter,Dr.**
  **D-68309 Mannheim (DE)**
- **Kipper, Jürgen,Dr.**
  **D-76137 Karlsruhe (DE)**
- **Albert, Bernhard,Dr.**
  **D-67133 Maxdorf (DE)**
- **Wagenblast, Gerhard,Dr.**
  **D-67157 Wachenheim (DE)**

(56) Entgegenhaltungen:
**DE-C- 3 305 146**
**US-A- 3 679 598**
**US-A- 3 708 665**
**US-A- 4 191 048**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 666 474 B1

## Beschreibung

Die vorliegende Erfindung betrifft die Verwendung von Verbindungen aus der Klasse der metallfreien oder metallhaltigen Naphthalocyanine, der Aminiumverbindungen von aromatischen Aminen, der Methinfarbstoffe oder der Azulenquadratsäurefarbstoffe, die ihr Absorptionsmaximum im Bereich von 600 bis 1 200 nm und ein Fluoreszenzmaximum im Bereich von 620 bis 1 200 nm aufweisen, als Riß-Prüfmittel.

Zur Detektion von Materialfehlern, insbesondere von Rissen, bei der Produktion von Werkstücken oder bei der Untersuchung wichtiger Bauteile, z.B. Tragflächen von Flugzeugen oder Turbinenteile, werden häufig sichtbare Fluoreszenzfarbstoffe angewandt. Als Anregungslichtquelle dient dabei im allgemeinen eine UV-Lampe.

Beispielsweise beschreibt die US-A-3 679 598 Mischungen von Fluoreszenzfarbstoffen mit weiteren Komponenten, z.B. Benzophenonen, zur Detektion von sehr kleinen Rissen in Testobjekten.

Zur Erhöhung der Empfindlichkeit des Nachweises der Fluoreszenz an Rissen sollen gemäß der US-A-3 560 399 trockene Entwickler auf Basis Silicagel, Aluminiumsilicaten oder Kaolin angewandt werden.

Aus der US-A-3 708 665 ist die Verwendung von Phthalocyaninen als Rißprüfmittel bekannt. Schließlich wird in der US-A-3 958 119 eine Methode beschrieben, mittels derer die Wirksamkeit von Fluoreszenzfarbstoffen als Rißprüfmittel beurteilt werden soll.

Die im Stand der Technik angewandten kurzwelligen Lichtquellen, z.B. UV-Strahler, sind teuer und in ihren Dimensionen, im Vergleich zu den untersuchten Rissen, sehr groß.

Aufgabe der vorliegenden Erfindung war es nun, geeignete Verbindungen, die sich als Riß-Prüfmittel eignen, bereitzustellen. Die Riß-Prüfmittel sollten im nahen Infrarot eine ausreichend starke Fluoreszenz aufweisen, so daß die Detektion der Fluoreszenz mit handelsüblichen Geräten, nach Anregung mit einer geeigneten einfachen Strahlenquelle, erfolgen kann.

Demgemäß wurde gefunden, daß sich die eingangs näher bezeichneten Verbindungen vorteilhaft als Riß-Prüfmittel eignen.

Metallhaltige Naphthalocyanine weisen in der Regel Lithium (zweimal), Magnesium, Zink, Mangan, VO, TiO, AlCl oder zweifach substituiertes Silicium, als Zentralatom auf.

Geeignete Naphthalocyanine gehorchen z.B. der Formel I

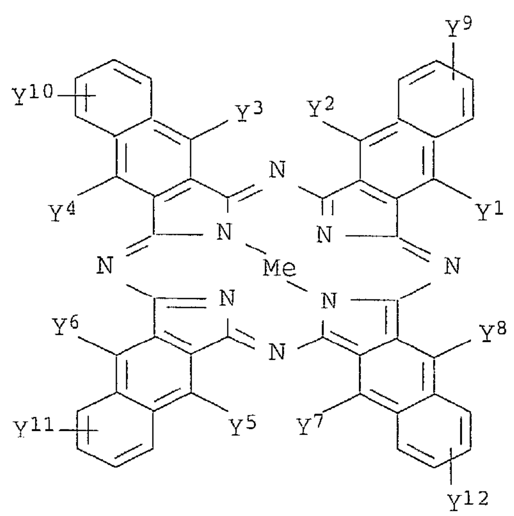

(I),

in der

$Y^1$, $Y^2$, $Y^3$, $Y^4$, $Y^5$, $Y^6$, $Y^7$ und $Y^8$ unabhängig voneinander jeweils Wasserstoff, Hydroxy oder einen Rest der Formel W-$X^4$, worin W für eine chemische Bindung, Sauerstoff, Schwefel, Imino, $C_1$-$C_4$-Alkylimino oder Phenylimino und $X^4$ für $C_1$-$C_{20}$-Alkyl, das gegebenenfalls durch 1 bis 4 Sauerstoffatome in Etherfunktion unterbrochen ist und durch Phenyl substituiert sein kann, $C_5$-$C_7$-Cycloalkyl, $C_2$-$C_{20}$-Alkenyl oder $C_4$-$C_{20}$-Alkadienyl stehen,

$Y^9$, $Y^{10}$, $Y^{11}$ und $Y^{12}$ unabhängig voneinander jeweils Wasserstoff, $C_1$-$C_{20}$-Alkyl oder $C_1$-$C_{20}$-Alkoxy, wobei die Alkylgruppen jeweils durch 1 bis 4 Sauerstoffatome in Etherfunktion unterbrochen sein können, Halogen, Hydroxysulfonyl oder $C_1$-$C_4$-Dialkylsulfamoyl und

Me zweimal Wasserstoff, zweimal Lithium, Magnesium, Zink, Mangan, VO, TiO, AlCl oder einen Rest der Formel Qa $Y^{22}$, $Sn(Y^{22})_2$ oder

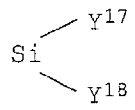

,

worin

$Y^{22}$ für Halogen, $C_1$-$C_6$-Alkoxy- Amino, $C_1$-$C_6$-Mono- oder Dialkylamino oder Pyridinium und $Y^{17}$ und $Y^{18}$ unabhängig voneinander jeweils für Hydroxy, $C_1$-$C_{20}$-Alkoxy, $C_1$-$C_{20}$-Alkyl, $C_2$-$C_{20}$-Alkenyl, $C_3$-$C_{20}$-Alkenyloxy oder einen Rest der Formel

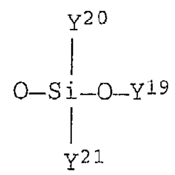

stehen, wobei $Y^{19}$ die Bedeutung von $C_1$-$C_{20}$-Alkyl, $C_2$-$C_{20}$-Alkenyl oder $C_4$-$C_{20}$-Alkadienyl und $Y^{20}$ und $Y^{21}$ unabhängig voneinander jeweils die Bedeutung von $C_1$-$C_{12}$-Alkyl, $C_2$-$C_{12}$-Alkenyl oder des obengenannten Rests $OY^{19}$ besitzen, bedeuten.

Von besonderem Interesse sind dabei Naphthalocyanine der Formel I, in der mindestens einer der Reste $Y^1$ bis $Y^8$ von Wasserstoff verschieden sind.

Geeignete Aminiumverbindungen gehorchen z.B. der Formel II

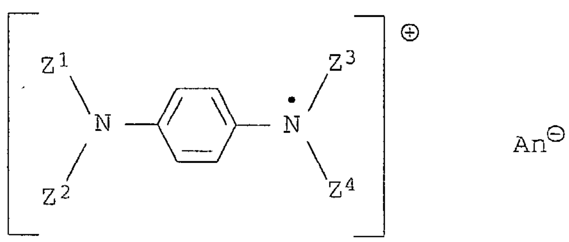

(II),

in der

$Z^1$, $Z^2$, $Z^3$ und $Z^4$ unabhängig voneinander jeweils $C_1$-$C_{20}$-Alkyl, das gegebenenfalls durch 1 bis 4 Sauerstoffatome in Etherfunktion unterbrochen ist, $C_1$-$C_{20}$-Alkanoyl oder einen Rest der Formel

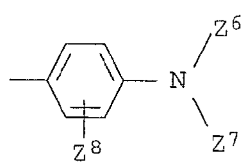

,

worin $Z^6$ für Wasserstoff, $C_1$-$C_{20}$-Alkyl, das gegebenenfalls durch 1 bis 4 Sauerstoffatome in Etherfunktion unterbrochen ist, oder $C_1$-$C_{20}$-Alkanoyl, $Z^7$ für Wasserstoff oder $C_1$-$C_{20}$-Alkoxy, das gegebenenfalls durch 1 bis 4 Sauerstoffatome in Etherfunktion unterbrochen ist, und $Z^8$ für Wasserstoff, $C_1$-$C_{20}$-Alkyl, das gegebenenfalls durch 1 bis 4 Sauerstoffatome in Etherfunktion unterbrochen ist, oder Halogen stehen, und

$An^{\ominus}$ das Äquivalent eines Anions bedeuten.

Geeignete Methinfarbstoffe gehorchen z.B. der Formel III

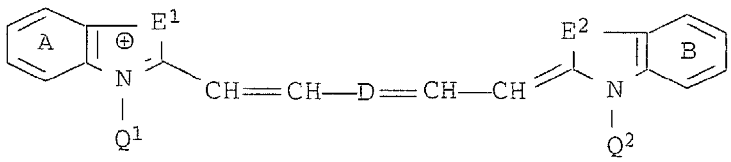

n $An^{\ominus}$ (III),

in der die Ringe A und B unabhängig voneinander jeweils gegebenenfalls benzoanelliert sind und substituiert sein können,

$E^1$ und $E^2$ unabhängig voneinander jeweils Sauerstoff, Schwefel, Imino oder einen Rest der Formel

$$-C(CH_3)_2- \text{ oder } -CH=CH- ,$$

D einen Rest der Formel

$$-CE^3= \text{ oder } -CH=CE^3-CH= ,$$

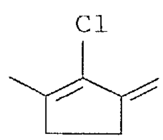 oder 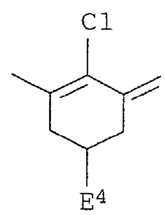 ,

worin $E^3$ für Wasserstoff, $C_1$-$C_6$-Alkyl, Chlor oder Brom und $E^4$ für Wasserstoff oder $C_1$-$C_6$-Alkyl stehen,

$Q^1$ und $Q^2$ unabhängig voneinander jeweils Phenyl, $C_5$-$C_7$-Cycloalkyl, $C_1$-$C_{20}$-Alkyl das durch 1 bis 4 Sauerstoffatome in Etherfunktion unterbrochen sein kann und gegebenenfalls durch Hydroxy, Chlor, Brom, Carboxyl, $C_1$-$C_4$-Alkoxycarbonyl, Acryloyloxy, Methacryloyloxy, Hydroxysulfonyl, $C_1$-$C_7$-Alkanoylamino, $C_1$-$C_6$-Alkylcarbamoyl, $C_1$-$C_6$-Alkylcarbamoyloxy oder einen Rest der Formel $G^{\oplus}(K)_3$, worin G für Stickstoff oder Phosphor und K für Phenyl, $C_5$-$C_7$-Cycloalkyl oder $C_1$-$C_{20}$-Alkyl stehen, substituiert sind,

$An^{\ominus}$ das Äquivalent eines Anions und

n 1, 2 oder 3 bedeuten.

Geeignete Azulenquadratsäurefarbstoffe gehorchen z.B. der Formel IV

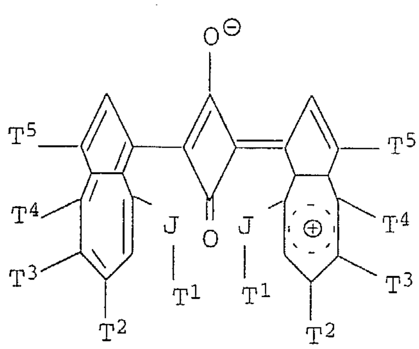

(IV),

in der

J $C_1$-$C_{12}$-Alkylen,

$T^1$ Wasserstoff, Halogen, Amino, Hydroxy, $C_1$-$C_{12}$-Alkoxy, Phenyl, substituiertes Phenyl, Carboxyl, $C_1$-$C_{12}$-Alkoxycarbonyl, Cyano oder einen Rest der Formel -$NT^7$-CO-$T^6$, -CO-$NT^6T^7$ oder O-CO-$NT^6T^7$, worin $T^6$ und $T^7$ unabhängig voneinander jeweils für Wasserstoff, $C_1$-$C_{12}$-Alkyl, $C_5$-$C_7$-Cycloalkyl, Phenyl, 2,2,6,6-Tetramethylpiperidin-4-yl oder Cyclohexylaminocarbonyl stehen, und

$T^2$, $T^3$, $T^4$ und $T^5$ unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten,

mit der Maßgabe, daß wenn $T^5$ Wasserstoff bedeutet, an einem oder beiden Azulenringen die Ringpositionen der Substituenten J-$T^1$ und $T^4$ innerhalb eines Azulenrings auch gegeneinander vertauscht sein können.

Alle in den obengenannten Formeln auftretenden Alkyl-, Alkylen- oder Alkenylreste können sowohl geradkettig als auch verzweigt sein.

In Formel I, II oder III sind geeignete $C_1$-$C_{20}$-Alkylreste,die gegebenenfalls durch 1 bis 4 Sauerstoffatome in Etherfunktion unterbrochen sind, z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Nonadecyl, Eicosyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl oder 3,6,9,12-Tetraoxatetradecyl.

In Formel I ist geeignetes $C_1$-$C_{20}$-Alkyl, das durch Phenyl substituiert ist, z.B. Benzyl oder 1- oder 2-Phenylethyl.

In Formel I sind geeignete $C_1$-$C_{20}$-Alkoxyreste, die gegebenenfalls durch 1 bis 4 Sauerstoffatome in Etherfunktion unterbrochen sind, z.B. Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, 2-Methoxyethoxy, 2-Ethoxyethoxy, 2-Propoxyethoxy, 2-Isopropoxyethoxy, 2-Butoxyethoxy, 2- oder 3-Methoxypropoxy, 2- oder 3-Ethoxypropoxy, 2- oder 3-Propoxypropoxy, 2- oder 3-Butoxypropoxy, 2- oder 4-Methoxybutoxy, 2- oder 4-Ethoxybutoxy, 2- oder 4-Propoxybutoxy, 2- oder 4-Butoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 4,8-Dioxadecyloxy, 3,6,8-Trioxadecyloxy, 3,6,9-Trioxaundecyloxy, 3,6,9,12-Tetraoxatridecyloxy oder 3,6,9,12-Tetraoxatetradecyloxy.

In Formel IV ist geeignetes substituiertes Phenyl z.B. durch $C_1$-$C_6$-Alkyl, $C_1$-$C_6$-Alkoxy, Hydroxy oder Halogen substituiertes Phenyl. In der Regel können dabei 1 bis 3 Substituenten auftreten.

Halogen in Formel I, II oder IV ist z.B. Fluor, Chlor oder Brom.

Reste W in Formel I sind z.B. Methylimino, Ethylimino, Propylimino, Isopropylimino oder Butylimino.

Reste $Y^9$ bis $Y^{12}$ in Formel I sind z.B. Dimethylsulfamoyl, Diethylsulfamoyl, Dipropylsulfamoyl, Dibutylsulfamoyl oder N-Methyl-N-ethylsulfamoyl.

$C_5$-$C_7$-Cycloalkyl in Formel I ist z.B. Cyclopentyl, Cyclohexyl, Methylcyclohexyl oder Cycloheptyl.

$C_2$-$C_{20}$-Alkenyl sowie $C_4$-$C_{20}$-Alkadienyl in Formel I ist z.B. Vinyl, Allyl, Prop-1-en-1-yl, Methallyl, Ethallyl, But-3-en-1-yl, Pentenyl, Pentadienyl, Hexadienyl, 3,7-Dimethylocta-1,6-dien-1-yl, Undec-10-en-1-yl, 6,10-Dimethylundeca-5,9-dien-2-yl, Octadec-9-en-1-yl, Octadeca-9,12- dien-1-yl, 3,7,11,15-Tetramethylhexadec-1-en-3-yl oder Eicos-9-en-1-yl.

$Z^6$ in Formel II bedeutet z.B. Formyl, Acetyl, Propionyl, Butyryl, Isobutyryl, Pentanoyl, Hexanoyl, Heptanoyl, Octanoyl oder 2-Ethylhexanoyl.

Wenn die Ringe A und/oder B in Formel III substituiert sind, so können als Substituenten z.B. $C_1$-$C_6$-Alkyl, Phenyl-$C_1$-$C_6$-alkoxy, Phenoxy, Halogen, Hydroxy, Amino, $C_1$-$C_6$-Mono- oder Dialkylamino oder Cyano in Betracht kommen. Die Ringe sind dabei in der Regel 1 bis 3-fach substituiert.

Reste $E^3$ und $E^4$ in Formel III sind z.B. Methyl, Ethyl, Propyl, Isopropyl, Butyl, Isobutyl, sec-Butyl, Pentyl, Isopentyl, Neopentyl, tert-Pentyl oder Hexyl.

Reste $Q^1$ und $Q^2$ in Formel III sind z.B. Cyclopentyl, Cyclohexyl, 2-Methoxyethyl, 2-Ethoxyethyl, 2- oder 3-Methoxypropyl, 2- oder 3-Ethoxypropyl, 2-Hydroxyethyl, 2- oder 3-Hydroxypropyl, 2-Chlorethyl, 2-Bromethyl, 2- oder 3-Chlorpropyl, 2- oder 3-Brompropyl, 2-Carboxyethyl, 2- oder 3-Carboxypropyl, 2-Methoxycarbonylethyl, 2-Ethoxycarbonylethyl, 2- oder 3-Methoxycarbonylpropyl, 2- oder 3-Ethoxycarbonylpropyl, 2-Acryloyloxyethyl, 2- oder 3-Acryloyloxypropyl, 2-Methacryloyloxyethyl, 2- oder 3-Methacryloyloxypropyl, 2-Hydroxysulfonylethyl, 2- oder 3-Hydroxysulfonylpropyl, 2-Acetylaminoethyl, 2- oder 3-Acetylaminopropyl, 2-Methylcarbamoylethyl, 2-Ethylcarbamoylethyl, 2- oder 3-Methylcarbamoylpropyl, 2- oder 3-Ethylcarbamoylpropyl, 2-Methylcarbamoyloxyethyl, 2-Ethylcarbamoyloxyethyl, 2- oder 3-Methylcarbamoyloxypropyl, 2- oder 3-Ethylcarbamoyloxypropyl, 2-(Trimethylammonium)ethyl, 2-(Triethylammonium)ethyl, 2- oder 3-(Trimethylammonium)propyl, 2- oder 3-(Triethylammonium)propyl, 2-(Triphenylphosphonium) ethyl oder 2- oder 3-(Triphenylphosphonium)propyl.

$An^{\ominus}$ in Formel II oder III leitet sich z.B. von Anionen organischer oder anorganischer Säuren ab. Besonders bevorzugt sind dabei z.B. Methansulfonat, 4-Methylbenzolsulfonat, Acetat, Trifluoroacetat, Heptafluorobutyrat, Chlorid, Bromid, Iodid, Perchlorat, Tetrafluoroborat, Nitrat, Hexafluorophosphat oder Tetraphenylborat.

Reste J in Formel IV sind z.B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen oder Dodecamethylen.

Reste $T^2$, $T^3$, $T^4$ und $T^5$ in Formel IV sind beispielsweise Methyl, Ethyl, Propyl, Isopropyl, Butyl, Isobutyl, sec-Butyl, tert-Butyl, Pentyl, Isopentyl, Neopentyl, tert-Pentyl, 2-Methylbutyl, Hexyl, 2-Methylpentyl, Heptyl, Octyl, 2-Ethylhexyl, Isooctyl, Nonyl, Isononyl, Decyl, Undecyl, Dodecyl, Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl, Cyanomethyl, 2-Cyanoethyl, 3-Cyanopropyl, 2-Cyanobutyl, 4-Cyanobutyl, 5-Cyanopentyl, 6-Cyanohexyl, 2-Aminoethyl, 2-Aminopropyl, 3-Aminopropyl, 2-Aminobutyl, 4-Aminobutyl, 5-Aminopentyl, 6-Aminohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Ethoxypropyl, 4-Ethoxybutyl, 4-Isopropoxybutyl, 5-Ethoxypentyl, 6-Methoxyhexyl, Benzyl, 1-Phenylethyl, 2-Phenylethyl, 4-Chlorbenzyl, 4-Methoxybenzyl, 2-(4-Methylphenyl)ethyl, Carboxymethyl, 2-Carboxyethyl, 3-Carboxypropyl, 4-Carboxybutyl, 5-Carboxypentyl, 6-Carboxyhexyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl oder 6-Ethoxycarbonylhexyl.

$T^1$ in Formel IV ist z.B. Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentyloxycarbonyl, Isopentyloxycarbonyl, Neopentyloxycarbonyl, tert-Pentyloxycarbonyl, Hexyloxycarbonyl, Heptyloxycarbonyl, Octyloxycarbonyl, Isooctyloxycarbonyl, Nonyloxycarbonyl, Isononyloxycarbonyl, Decyloxycarbonyl, Isodecyloxycarbonyl, Undecyloxycarbonyl, Dodecyloxycarbonyl, Methoxy, Ethoxy, Propoxy, Isopropoxy, Butoxy, Isobutoxy, Pentyloxy, Hexyloxy, Acetylamino, Carbamoyl, Mono- oder Dimethylcarbamoyl, Mono- oder Diethylcarbamoyl, Monocyclohexylcarbonyl, Phenylcarbamoyl, Dimethylcarbamoyloxy oder Diethylcarbamoyloxy.

Bevorzugt ist die erfindungsgemäße Verwendung von solchen Verbindungen, die aus der Klasse der metallfreien oder metallhaltigen Naphthalocyanine stammen.

Hervorzuheben ist die erfindungsgemäße Verwendung von Naphthalocyaninen der Formel Ia

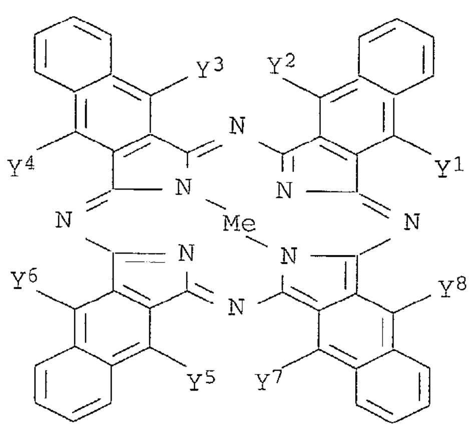

(Ia),

in der

$Y^1$, $Y^2$, $Y^3$, $Y^4$, $Y^5$, $Y^6$, $Y^7$ und $Y^8$ unabhängig voneinander jeweils Wasserstoff, Hydroxy, $C_1$-$C_4$-Alkyl oder $C_1$-$C_{20}$-Alkoxy und

Me zweimal Wasserstoff, zweimal Lithium, Magnesium, Zink, Mangan, VO, AlCl oder den Rest

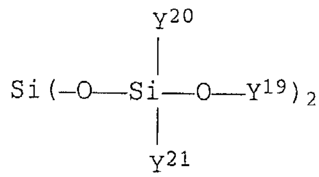

bedeuten, worin $Y^{19}$ für $C_1$-$C_{13}$-Alkyl oder $C_{10}$-$C_{20}$-Alkadienyl und $Y^{20}$ und $Y^{21}$ unabhängig voneinander jeweils für $C_1$-$C_{13}$-Alkyl oder $C_2$-$C_4$-Alkenyl stehen.

Besonders hervorzuheben ist die erfindungsgemäße Verwendung von Naphthalocyaninen der Formel Ia, in der $Y^1$, $Y^2$, $Y^3$, $Y^4$, $Y^5$, $Y^6$, $Y^7$ und $Y^8$ unabhängig voneinander jeweils Hydroxy, $C_1$-$C_{20}$-Alkoxy, insbesondere $C_1$-$C_{10}$-Alkoxy bedeuten. Die Alkoxyreste können dabei gleich oder verschieden sein.

Besonders hervorzuheben ist weiterhin die erfindungsgemäße Verwendung von Naphthalocyaninen der Formel Ia, in der $Me^2$ zweimal Wasserstoff bedeutet.

Die Naphthalocyanine der Formel I sind an sich bekannt und beispielsweise in der EP-A-336 213, EP-A-358 080, GB-A-2 168 372 oder GB-A-2 200 650 beschrieben oder können nach an sich bekannten Methoden, wie sie bei der Herstellung von Phthalocyaninen oder Naphthalocyaninen zur Anwendung kommen und wie sie beispielsweise in F.H. Moser, A.L. Thomas "The Phthalocyanines", CRC Press, Boca Rota, Florida, 1983, oder J. Am. Chem. Soc. Band 106, Seiten 7404 bis 7410, 1984, beschrieben sind, erhalten werden.

Die Aminiumverbindungen der Formel II sind ebenfalls an sich bekannt und z.B. in US-A-3 484 467 beschrieben oder können gemäß den dort genannten Methoden erhalten werden.

Die Methinfarbstoffe der Formel III sind ebenfalls an sich bekannt und z.B. in der EP-A-464 543 beschrieben oder können gemäß den dort genannten Methoden erhalten werden.

Die Azulenquadratsäurefarbstoffe der Formel IV sind ebenfalls an sich bekannt und z.B. in der EP-A-310 080 oder US-A-4 990 649 beschrieben oder können gemäß den dort genannten Methoden erhalten werden.

Zur Anwendung als Riß-Prüfmittel werden die obengenannten Verbindungen im allgemeinen in Form von Lösungen angewandt. Als Lösungsmittel eignen sich organische Lösungsmittel. Vorzugsweise kommen aromatische Kohlenwasserstoffe, wie Toluol, Xylol, Dodecylbenzol, Diisopropylnaphthalin, Paraffinöl oder ein Gemisch höherer Aromaten, das unter dem Namen Shellsol® AB (Fa. Shell) handelsüblich ist, zur Anwendung. Gegebenenfalls werden in untergeordneten Mengen (z.B. bis zu 15 Gew.-%, bezogen auf das Gewicht der Lösung) noch nichtionische Tenside, z.B. Alkylphenolpolyethylenglykolether, zugegeben. Um eine zu hohe Viskosität der resultierenden Lösungen zu vermeiden, wählt man im allgemeinen eine Konzentration an IR-Strahlung absorbierender und im IR-Bereich fluoreszierender Verbindung von 2 bis 50 Gew.-%, bezogen auf das Gewicht der Lösung.

Geeignete Materialien, bei denen eine mögliche Rißbildung festgestellt werden soll, sind z.B. Gegenstände aus Metall, wie Eisen-, Aluminium-, Silicium-, Titan- oder Magnesiumlegierungen, keramische Werkstoffe auf Basis von Siliciumdioxid oder Aluminiumoxid oder Kunststoffe, wie Polyolefine (z.B. Polyethylen oder Polypropylen), Polycarbonat, Polymethyl(meth)acrylat, Polyurethan, Polyester oder Polymere auf Basis Acrylsäure, Butadien und Styrol.

Die Prüfung auf Rißbildung erfolgt in der Regel so, daß der Prüfkörper entfettet und gereinigt und dann mit der oben näher beschriebenen Lösung bestrichen wird. Überschüssige Prüflösung wird dann entfernt und der Prüfkörper wird dann mit Wasser gereinigt und getrocknet.

Zum Nachweis wird die Fluoreszenz der Riß-Prüfmittel vorteilhaft mit einem Halbleiterlaser oder einer Halbleiterdiode angeregt. Besonders günstig ist es, dabei einen Halbleiterlaser oder eine Halbleiterdiode mit einer Wellenlänge der maximalen Emission im Spektralbereich von $\lambda_{max}$ -100 nm bis $\lambda_{max}$ +20 nm anzuwenden. $\lambda_{max}$ bedeutet dabei die Wellenlänge des Absorptionsmaximums des Markierstoffs. Die Wellenlänge der maximalen Emission liegt dabei im Bereich von 620 bis 1 200 nm.

Das so erzeugte Fluoreszenzlicht wird vorteilhaft mit einem Halbleiterdetektor, insbesondere mit einer Silicium-Photodiode oder einer Germanium-Photodiode, detektiert.

Besonders vorteilhaft gelingt der Nachweis, wenn sich vor dem Detektor noch ein Interferenzfilter und/oder ein Kantenfilter (mit einer kurzwelligen Transmissionskante im Bereich von $\lambda_{max}$ bis $\lambda_{max}$ +80 nm) und/oder ein Polarisator befindet.

Der Vorteil der erfindungsgemäß als Riß-Prüfmittel zur Anwendung gelangenden Verbindungen besteht darin,

daß ihr Nachweis leicht gelingt, auch bei Gegenwart von Tageslicht. Man benötigt keine teuren Lampen und kann auf verdunktelte Sichtprüfboxen verzichten.

Es erfolgt auch keine Störung durch sichtbare Fluoreszenz, die beispielsweise bei Kunststoffteilchen oder Gegenständen, die Farbstoffe enthalten, entstehen kann. Daher eignen sich die erfindungsgemäß zur Anwendung gelangten Verbindungen auch als Riß-Prüfmittel für lackierte Gegenstände.

Bei Verwendung einer geeigneten Videokamera als Detektor für die NIR-Fluoreszenz sowie einer digitalen Bildverarbeitung läßt sich die Rißprüfung auch automatisieren.

Die folgenden Beispiele sollen die Erfindung näher erläutern.

a) Herstellung der Prüflösung

Es wurde eine Prüflösung durch Mischen von 25 g Xylol, 25 g eines hochsiedenden Aromatengemisches (unter dem Namen Shellsol® AB der Firma Shell handelsüblich), 40 g Paraffinöl weiß, 20 g nichtionisches Tensid auf Basis von Alkylphenolpolyethylenglykolether und 0,1 g einer unten näher bezeichneten Detektorverbindung hergestellt.

b) Vorbereitung des Prüfkörpers

Als Prüfkörper wurde ein Aluminiumblock verwendet, der mehrere Risse aufwies.

Zur Probenbereitung wurde die Prüflösung mit einem Pinsel auf den entfetteten und gereinigten Prüfkörper aufgetragen. Nach 10minütigem Einwirken wurde die überschüssige Prüflösung mit einem Papiertuch abgewischt und der Prüfkörper unter fließendem Wasser abgespült und getrocknet.

In einigen unten bezeichneten Fällen wurde der Prüfkörper danach noch mit einem handelsüblichen Developer auf Basis von Siliciumdioxid besprüht.

c) Nachweismethode 1

Der Prüfkörper wurde ganzflächig mit einer Wolfram/Halogen-Lampe oder einem Halbleiterdiodenlaser (20 mW, 820 nm) beleuchtet.

Die Fluoreszenz der Detektorverbindung wurde mit einer Schwarz/Weiß-Video-Kamera (CCD 330 SW/RS, Firma Spindler und Hoyer) beobachtet, die mit einem Objektiv und einem Interferenzfilter (890 nm) ausgestattet war. Die flächemäßige Verteilung der Detektorverbindung wurde auf einem Schwarz/Weiß-Monitor der Firma Sony abgebildet.

d) Nachweismethode 2

Der Prüfkörper wurde mit dem fokussierten Strahl eines Halbleiterdiodenlasers (20 mW, 820 nm) abgerastert.

Die Beobachtung der Fluoreszenz erfolgte wie unter c) beschrieben.

Folgende Farbstoffe kamen als Detektorverbindungen zur Anwendung.

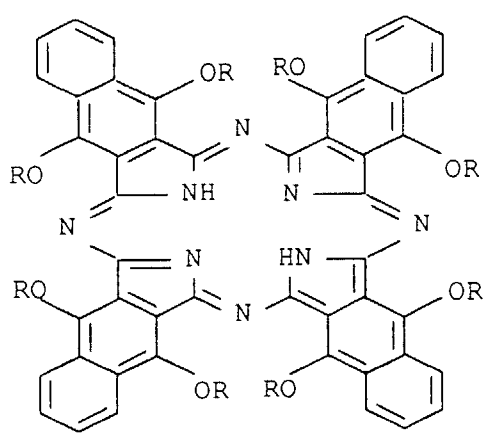

Farbstoff 1

R=n-$C_4H_9$

Farbstoff 2

R= n-$C_5H_{11}$

Farbstoff 3

R=n-$C_{12}H_{25}$

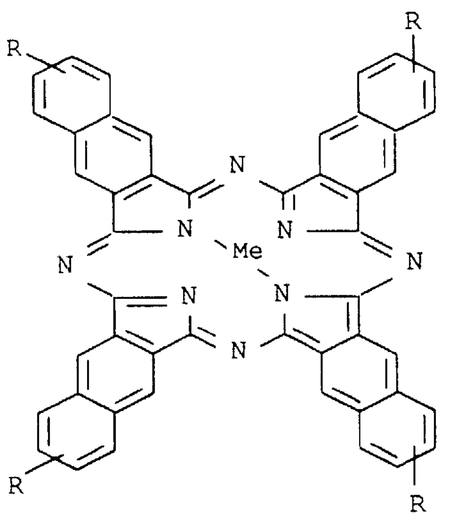

(R=t-$C_4H_9$)

Farbstoff 4

Me = 2H

Farbstoff 5

Me = Zn

Farbstoff 6

Me = AlCl

Farbstoff 7

$NcSi[-O-Si(CH_3)_2-O-C_{12}H_{25}]_2$ (Nc = Naphthalocyanin)

Farbstoff 8

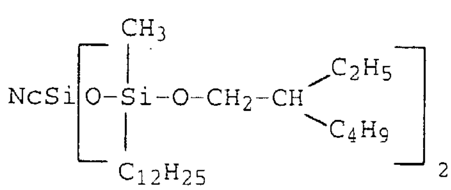

Farbstoff 9

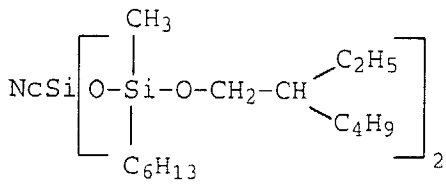

Farbstoff 10

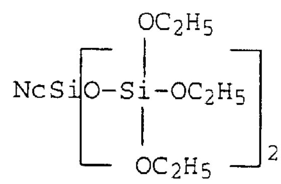

Farbstoff 11

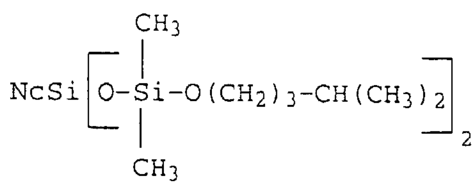

Farbstoff 12

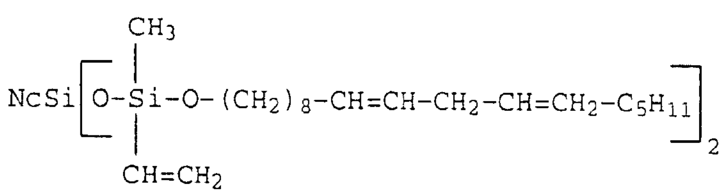

Farbstoffe 13 bis 15

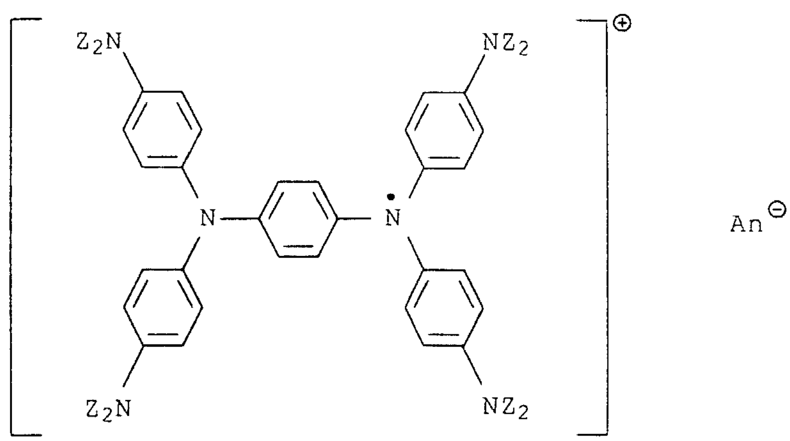

| Farbstoff Nr. | Z | $An^{\ominus}$ |
|---|---|---|
| 13 | $C_4H_9$ | $NO_3^{\ominus}$ |
| 14 | $C_2H_5$ | $NO_3^{\ominus}$ |
| 15 | $C_4H_9$ | $BF_4^{\ominus}$ |

Farbstoffe 16 bis 20

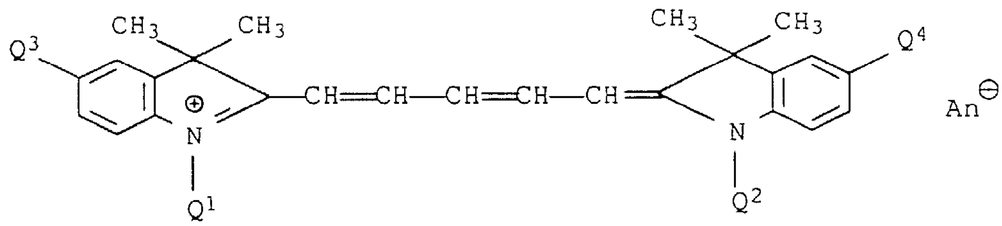

| Farbstoff Nr. | $Q^1$ | $Q^2$ | $Q^3$ | $Q^4$ | $An^{\ominus}$ |
|---|---|---|---|---|---|
| 16 | $CH_3$ | $CH_3$ | Cl | Cl | $I^{\ominus}$ |
| 17 | $CH_3$ | $CH_3$ | H | H | $I^{\ominus}$ |
| 18 | $C_2H_4OC(=O)NHC(CH_3)_3$ | $C_2H_4OC(=O)NHC(CH_3)_3$ | H | H | $I^{\ominus}$ |
| 19 | $C_2H_4C(=O)NHC_6H_{13}$ | $C_2H_4C(=O)NHC_6H_{13}$ | H | H | $ClO_4^{\ominus}$ |
| 20 | $C_3H_6SO_3^{\ominus}$ | $C_3H_6SO_3H$ | H | H | Betain |

Farbstoff Nr. 21

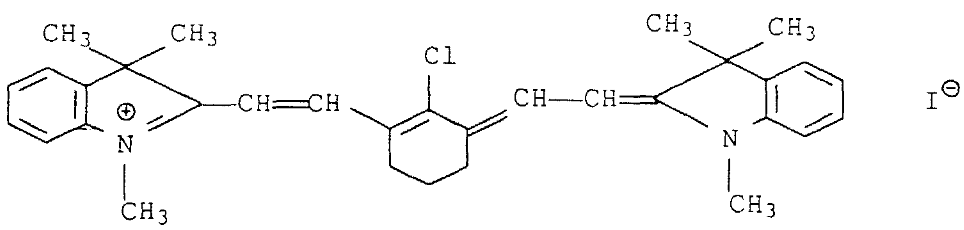

Bei Anwendung der Nachweismethode 1 waren bei den vorbehandelten Prüfkörpern (ohne Developer) alle Risse (unabhängig von der Gegenwart von Tageslicht) anhand einer schwachen Fluoreszenz erkennbar.

Waren die Prüfkörper noch mit Developer behandelt, so waren alle Risse (unabhängig von der Gegenwart von Tageslicht) anhand einer starken Fluoreszenz erkennbar.

Bei Anwendung der Nachweismethode 2 waren bei den vorbehandelten Prüfkörpern (ohne Developer) alle Risse (unabhängig von der Gegenwart von Tageslicht) anhand eines starken Fluoreszenzkontrasts erkennbar.

## Patentansprüche

1. Verwendung von Verbindungen aus der Klasse der metallfreien oder metallhaltigen Naphthalocyanine, der Aminiumverbindungen von aromatischen Aminen, der Methinfarbstoffe oder der Azulenquadratsäurefarbstoffe, die ihr Absorptionsmaximum im Bereich von 600 bis 1 200 nm und ein Fluoreszenzmaximum im Bereich von 620 bis 1 200 nm aufweisen, als Riß-Prüfmittel.

2. Verwendung von Verbindungen nach Anspruch 1, dadurch gekennzeichnet, daß sie aus der Klasse der metallfreien oder metallhaltigen Naphthalocyanine stammen.

## Claims

1. The use of a compound from the class consisting of the metal-free or metal-containing naphthalocyanines, the aminium compounds of aromatic amines, the methine dyes or the azulenes-quaric acid dyes, which have their absorption maximum in the range from 600 to 1,200 nm and a fluorescence maximum in the range from 620 to 1,200 nm, as a crack-detecting agent.

2. The use of a compound as claimed in claim 1, which originates from the class consisting of the metal-free or metal-containing naphthalocyanines.

## Revendications

1. Utilisation de composés de la classe des naphtalocyanines contenant du métal ou exemptes de métal, des composés aminium d'amines aromatiques, des colorants méthiniques ou des colorants acide d'azulène quadratique, présentant leur maximum d'absorption dans la gamme de 600-1200 nm et un maximum de fluorescence dans la gamme de 620-1200 nm, en tant qu'agents de détection de criques.

2. Utilisation de composés selon la revendication 1, caractérisé en ce qu'ils proviennent de la classe des naphtalocyanines contenant du métal ou exemptes de métal.